# FASCICULE DE BREVET EUROPEEN

(11) **EP 2 630 318 B1**
(45) Date de publication et mention de la délivrance du brevet: **16.07.2014**
(21) Numéro de dépôt: 11771249.7
(22) Date de dépôt: 21.09.2011
(51) Int. Cl.: E05B 15/02, E05B 17/20, B64D 29/06, E05C 19/14

(54) **DISPOSITIF DE VERROUILLAGE A DETECTION MECANIQUE DE FERMETURE ET OUVERTURE**
VERRIEGELUNGSVORRICHTUNG MIT MECHANISCHER ERKENNUNG VON SCHLIESSEN UND ÖFFNEN
LOCKING DEVICE WITH MECHANICAL DETECTION OF CLOSING AND OPENING

(30) Priorité: 21.10.2010 FR 1058591
(43) Date de publication de la demande: 28.08.2013
(73) Titulaire: Aircelle, 76700 Gonfreville L'Orcher (FR)
(72) Inventeur: GONIDEC, Patrick, F-31530 Bretx (FR)
(74) Mandataire: Gaillarde, Frédéric F. Ch.
(86) Numéro de dépôt international: PCT/FR2011/052180
(87) Numéro de publication internationale: WO 2012/052643

(56) Documents cités:
- EP-A2- 0 431 769
- WO-A1-2009/009732
- US-A- 2 704 218
- US-A- 4 828 299
- US-A- 5 984 382

## Description

La présente invention se rapporte à un système de verrouillage comprenant un système mécanique associé de détection de la fermeture ou ouverture dudit système de verrouillage et équipant notamment un capot ou une trappe de nacelle de turboréacteur.

Une nacelle d'avion est destinée à entourer un turboréacteur et à produire la poussée du turboréacteur en canalisant les flux engendrés par le moteur. Elle doit aussi pouvoir être ouverte afin d'accéder au moteur et à ses équipements.

La plupart des nacelles de turboréacteur comprennent un capot de soufflante entourant le carter de soufflante du moteur et un corps arrière (souvent un inverseur de poussée) entourant la partie centrale du moteur.

Pour assurer l'accès au moteur et à ses équipements, ces deux composants de nacelle s'ouvrent en général en deux demi-parties.

L'ouverture de ces capots ou trappes est permise grâce à la présence de charnières, généralement montées en partie supérieure de la nacelle, en position dite douze heures, le long d'une ligne de mât, et sont maintenues fermées grâce à une pluralité de verrous montés généralement selon une ligne de verrouillage en partie inférieure, dite six heures.

Il est bien évidemment essentiel qu'après une opération de maintenance, l'intégralité des verrous soit refermée.

A cette fin, il convient de pouvoir s'assurer de manière efficace, sûre et rapide, du bon verrouillage de tous les capots ouvrables d'une nacelle avant toute mise en service de la nacelle. Aujourd'hui, dans la plupart des cas, cette vérification repose quasi-entièrement sur la vigilance du mécanicien qui effectue l'opération de verrouillage. De ce fa it, certaines erreurs de maintenance ont causé un nombre significatif de mauvaises fermetures de capots de soufflante, induisant parfois des événements majeurs en vol (ouverture et perte d'un capot de soufflante). Un indicateur clair du verrouillage des capots de nacelles est donc une source d'amélioration significative de la sécurité des vols.

Une des causes les plus fréquentes d'ouverture en vol est la fermeture ou l'ouverture partielle des verrous de capot. Dans ce cas de figure, il est souvent difficile lors d'une vérification de routine de s'apercevoir qu'un ou plusieurs verrous sont mal fermés, car le verrouillage d'un seul verrou « met en place » le capot qui semble alors de loin correctement fermé.

Ainsi, pour fournir un système de détection efficace, il doit être impossible d'amorcer un déverrouillage ou de pouvoir déverrouiller partiellement le capot sans que l'indicateur de statut correspondant n'affiche un statut déverrouillé.

Bien évidemment, de telles considérations s'appliquent également à des nacelles non équipées d'inverseurs de poussée, dites lisses, et comprenant des capots ouvrables permettant d'accéder à l'intérieur de la nacelle de la même manière, ainsi qu'à d'autres capots de maintenance équipant la nacelle.

Il existe donc un besoin pour un système de détection de fermeture répondant aux exigences ci-dessus mentionnées.

On connaît de tels systèmes électriques de détection de verrouillage permettant d'assurer un contrôle visuel de situation. Un tel système nécessite toutefois une source d'alimentation électrique et est sujet à d'éventuelles défaillances électriques.

Une des difficultés d'un système mécanique est toutefois de s'assurer que l'indicateur de déverrouillage affiche bien un statut de déverrouillage dès le premier verrou ouvert, et réciproquement que cet indicateur ne puisse passer en statut de verrouillage que lorsque strictement tous les verrous sont verrouillés.

Par ailleurs, les systèmes mécaniques existant se bornent à contrôler la position de la poignée du verrou, alors que la fonction mécanique recherchée est la mise sous contrainte des verrous.

On connait par ailleurs, du document US 2 704 218, un dispositif de verrouillage conforme au préambule de la revendication 1.

Pour ce faire, la présente invention vise un dispositif de verrouillage entre une première structure et une deuxième structure, comprenant au moins une paire de verrouillage comportant au moins un pêne rattaché à la première structure et apte à venir s'engager avec au moins un moyen de retenue correspondant, rattaché à la deuxième structure, le pêne étant par ailleurs monté mobile à l'encontre d'au moins un moyen de renvoi élastique tendant à le ramener dans une position d'écartement du moyen de retenue,
ledit dispositif de verrouillage étant caractérisé en ce qu'il comprend au moins une tringlerie de détection, montée mobile entre une première position dans laquelle elle permet le déverrouillage du pêne et du moyen de retenue, au moins une partie du pêne venant alors en prise avec la tringlerie, de manière à en bloquer un retour éventuel de cette dernière vers une deuxième position, et ladite deuxième position dans laquelle la tringlerie vient en prise avec au moins une partie de la paire de verrouillage de manière à en bloquer le déverrouillage.

Ainsi, en prévoyant une tringlerie bloquée en position par le pêne lorsque la paire de verrouillage est déverrouillée, la tringlerie ne peut revenir dans sa deuxième position, indiquant le verrouillage du dispositif que lorsque la paire de verrouillage est effectivement reverrouillée. Dans le cas d'un ensemble de paires de verrouillage dont les tringleries sont reliées entre elles, ces dernières ne pourront donc revenir dans leur deuxième position indiquant le reverrouillage de la paire de verrouillage associée que lorsque toutes les paires de verrouillage auront bien été reverrouillées.

A l'inverse pour le déverrouillage, en prévoyant un élément de tringlerie venant en prise avec une partie de la paire de verrouillage pour en bloquer le déverrouillage, il est nécessaire de basculer la tringlerie dans sa première position, indiquant donc le déverrouillage, pour procéder effectivement au déverrouillage de la paire de verrouillage.

Ainsi, grâce à un tel dispositif, un indicateur de situation lié à la tringlerie indiquera toujours correctement le statut des paires de verrouillage et empêchera tout changement de statut qui ne serait pas répercuté audit indicateur de situation.

Avantageusement, le pêne se présente sous la forme d'un étrier.

Préférentiellement, le moyen de retenue se présente sous la forme d'un crochet.

De manière préférentielle, la tringlerie vient en prise avec le moyen de retenue, de manière à en empêcher l'ouverture.

Avantageusement, la partie de tringlerie venant empêcher le déverrouillage de la paire de déverrouillage se présente sous la forme d'un doigt de blocage.

Selon un mode préféré de réalisation, la partie de la tringlerie apte à venir en prise avec le pêne de manière à bloquer le retour de la tringlerie dans sa deuxième position est une tige montée mobile en translation.

Avantageusement, la tige présente une lumière longitudinale apte à venir en prise avec une tige portée par le pêne et servant de butée à la tige de tringlerie.

De manière préférentielle, la tringlerie est liée à un moyen d'indication d'état déverrouillable ou verrouillée de la paire de verrouillage.

Avantageusement, le pêne est associé à au moins un moyen de réglage de sa tension de fin de course, réalisé notamment sous la forme d'une extrémité en ridoir.

Selon une mise en oeuvre avantageuse de l'invention, le dispositif comprend plusieurs paires de verrouillage, disposées notamment le long d'une ligne de verrouillage, les tringleries associées étant reliées entre elles par au moins un moyen de transmission mécanique.

La présente invention se rapporte également à une nacelle de turboréacteur comprenant au moins un capot mobile, caractérisée en ce qu'elle comprend au moins un dispositif de verrouillage associé selon l'une quelconque des revendications. Plus particulièrement, il pourra s'agir d'un capot mobile d'une section médiane entourant une soufflante du turboréacteur.

La présente invention sera mieux comprise à la lumière de la description détaillée qui suit en regard du dessin annexé dans lequel :
- la figure 1 est une représentation schématique d'un capot ouvrant de nacelle équipé d'un dispositif de verrouillage selon l'invention,
- la figure 2 est une représentation schématique en coupe longitudinale vue de côté d'une paire de verrouillage du dispositif de la figure 1, ladite paire de verrouillage étant verrouillée,
- la figure 3 est une représentation schématique en coupe longitudinale vue de dessus de la paire de verrouillage de la figure 2,
- la figure 4 est une représentation schématique en coupe longitudinale vue de côté de la paire de déverrouillage de la figure 1, ladite paire de verrouillage étant en cours de déverrouillage,
- la figure 5 est une représentation schématique en coupe longitudinale vue de dessus de la paire de verrouillage de la figure 4,
- la figure 6 est une représentation schématique en coupe longitudinale vue de côté de la paire de déverrouillage de la figure 2, ladite paire de verrouillage étant déverrouillée.

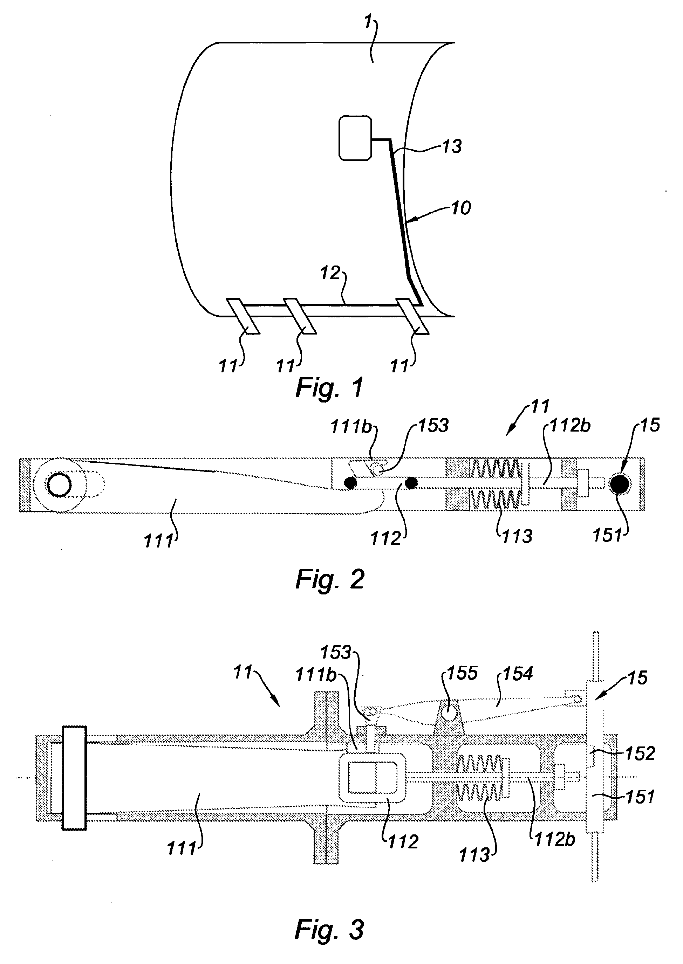

La figure 1 montre un capot 1 ouvrant d'une nacelle de turboréacteur (non représentée). Plus particulièrement, il pourra s'agir d'un capot de soufflante.

Le capot 1 est monté pivotant autour d'une ligne charnière supérieure (non représentée) et est apte à être verrouillé en partie inférieure au niveau d'une ligne de verrouillage le long de laquelle est installé un dispositif de verrouillage 10 selon l'invention.

Ce dispositif de verrouillage 10 comprend une pluralité de paires de verrouillage 11 possédant, conformément à l'invention, une tringlerie 12 liée à un indicateur de statut (verrouillé / déverrouillé) 13.

Une paire de verrouillage 11 et son fonctionnement conformément à l'invention est représentée en détail sur les figures 2 à 6.

Une paire de verrouillage 11 comprend classiquement un pêne se présentant sous la forme d'un étrier 112 et apte à coopérer avec un crochet correspondant 111 formant un moyen de retenue pour le pêne.

Dans les modes de réalisations selon l'état de l'art, cet étrier est généralement fixe par rapport à la structure du verrou sur laquelle il est vissé.

Dans la présente invention, l'étrier 112 possède une tige 112b grâce à laquelle il est monté mobile en translation entre une position de verrouillage dans laquelle il peut être engagé avec le crochet 111 et une position de déverrouillage dans laquelle il est écarté du crochet 111.

De plus, l'étrier 112 est monté à l'encontre d'un moyen de retour élastique se présentant sous la forme d'un ressort 113 tendant à le renvoyer en position déverrouillée.

Conformément à l'invention, la paire de verrouillage 11 est associée à une tringlerie 15 de détection.

Cette tringlerie 15 est mobile entre une première position dans laquelle elle permet le déverrouillage de l'étrier 112 et du crochet 111 et une deuxième position dans laquelle la tringlerie vient en prise avec au moins une partie de la paire de verrouillage, de manière à en bloquer le déverrouillage.

Pour ce faire, la tringlerie 15 comprend un premier élément mobile en translation selon une direction sensiblement transversale à la paire de verrouillage et se présentant sous la forme d'une tige 151 possédant une lumière 152 transversale. La tige 151 et la lumière 152 sont disposées de manière telle que, d'une part, lorsque la tringlerie 15 est dans sa première position permettant le déverrouillage, la tige 112b de l'étrier 112 pénètre la lumière 152 de la tige 151 qui sert alors de butée à cette dernière, et que d'autre part, lorsque la tringlerie 15 est dans sa deuxième position correspondant au verrouillage de la paire de verrouillage 11, la tige 151 serve de butée à la tige 112b de l'étrier 112, empêchant un éventuel recul de ce dernier.

La tringlerie 15 comprend également un deuxième élément mobile, se présentant sous la forme d'un doigt de verrouillage 153 monté mobile selon une direction sensiblement transversale à la paire de verrouillage 11 apte à coopérer avec le crochet 111, notamment par l'intermédiaire d'un crocheton d'extrémité 111 b, de manière à empêcher le déverrouillage dudit crochet 11. Il convient de préciser que ce doigt de verrouillage ne vise pas à constituer un moyen de verrouillage sécurisé en vol, et ainsi à remplacer d'autres lignes de défense pour empêcher l'ouverture du crochet, mais vise à retenir ledit crochet 11 contre une ouverture intempestive par un opérateur, conformément à l'objet de l'invention.

Alternativement, ou pourra notamment prévoir à la place d'un doigt de verrouillage 153, une plaque de masquage apte à pivoter de manière à masquer ou libérer l'accès à la poignée de verrou 11.

Le doigt de verrouillage 153 est relié à la tige 151 par une bascule 154 à pivot 155 assurant que le doigt de verrouillage 153 est rétracté lorsque la tige 151 est en position permettant le déverrouillage, et réciproquement que le doigt de verrouillage 153 est engagé lorsque la tige 151 bloque le retrait de l'étrier 112. Ce dispositif empêche donc l'opérateur de déverrouiller le verrou, alors que l'indicateur de verrouillage n'est pas désactivé par l'opérateur.

Le fonctionnement du dispositif est détaillé sur les figures 2 à 6.

Les figures 2 et 3 montrent une paire de verrouillage 11 en position verrouillée.

L'étrier 112 est donc engagé avec le crochet 111 qui le retient contre le ressort 113.

La tringlerie 15 est dans sa deuxième position et le doigt de verrouillage 153 bloque l'ouverture du crochet 111.

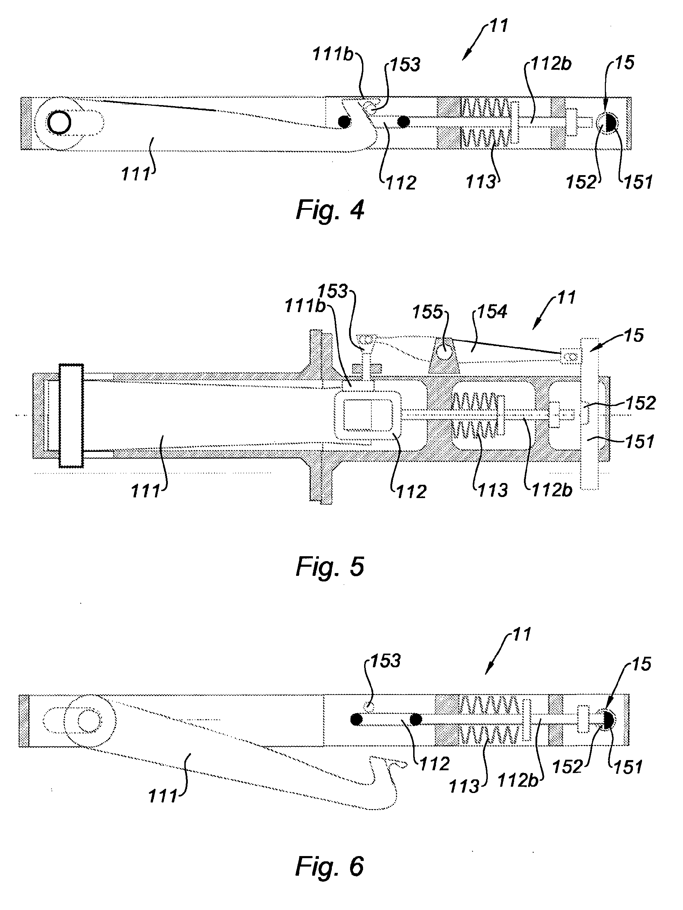

Le déverrouillage de la paire de verrouillage 11 n'est donc possible que si la tringlerie 15 est basculée dans sa première position, comme représenté sur les figures 4 et 5.

Basculée dans cette position, la tige 151 est déplacée dans sa première position, telle que la lumière 152 se situe en regard de la tige 112b de l'étrier 112 et permette son écartement.

Ce faisant, la bascule 154, articulée sur son pivot 155, provoque la rétractation du doigt de verrouillage 153, ce qui libère le crochet 111.

Le déverrouillage de la paire de déverrouillage 11 est maintenant permis. Cette étape est représentée à la figure 6. L'étrier 112 est alors relâché et forcé en retrait par son ressort 113. Ceci provoque le recul de la tige 112b de l'étrier qui pénètre dans la lumière 152 et vient bloquer tout mouvement en translation de la tige 151.

Ainsi, dans le cas d'une pluralité de paires de verrouillage 11 telles que visible sur la figure 1, chaque tringlerie 15 de chaque paire est reliée à la tringlerie suivante, de manière à former une chaîne mécanique unique constituant la tringlerie 12 à l'échelle de l'ensemble du dispositif de verrouillage 10 qui transmet l'état de déverrouillage ou de verrouillage du dispositif à l'indicateur 13 associé.

Ainsi, comme la tringlerie 15 est assujettie à l'indicateur de déverrouillage, un opérateur ne peut déverrouiller le capot 1 qu'après avoir positionné l'indicateur 13 en position déverrouillée et donc que si l'indicateur 13 du système de déverrouillage 10 indique bien un statut de déverrouillage possible.

Réciproquement, l'indicateur 13 ne peut repasser en situation de verrouillage, c'est-à-dire montrant que le verrouillage est sécurisé, que si toutes les paires de déverrouillage 11 ont été reverrouillées. En effet, compte tenu du système de tringlerie 12, 15, une seule paire de verrouillage 11 non reverrouillée bloque la tringlerie 15, et donc empêche que la tringlerie 12 ne bascule l'indicateur 13 en position d'indiquer le reverrouillage.

Par ailleurs, le dispositif de l'invention est mécanique et est donc fiable et non sujet à panne électrique.

Bien que l'invention ait été décrite avec un exemple particulier de réalisation, il est bien évident qu'elle n'y est nullement limitée et qu'elle comprend tous les équivalents techniques des moyens décrits, ainsi que leurs combinaisons si celles-ci entrent dans le cadre de l'invention, définie par les revendications annexées.

Notamment, le pêne 112 pourra être réglable en tension, notamment à l'aide d'une tige 112b en ridoir.

## Revendications

1. Dispositif de verrouillage (10) entre une première structure et une deuxième structure, comprenant au moins une paire de verrouillage (11) comportant au moins un pêne (112) rattaché à la première structure et apte à venir s'engager avec au moins un moyen de retenue (111) correspondant, rattaché à la deuxième structure, le pêne (112) étant par ailleurs monté mobile à l'encontre d'au moins un moyen de renvoi élastique (113) tendant à le ramener dans une position d'écartement du moyen de retenue,
ledit dispositif de verrouillage étant **caractérisé en ce qu'**il comprend au moins une tringlerie (15) de détection, montée mobile entre une première position dans laquelle elle permet le déverrouillage du pêne (112) et du moyen de retenue, au moins une partie du pêne (112) venant alors en prise avec la tringlerie (15), de manière à en bloquer un retour éventuel de cette dernière vers une deuxième position, et ladite deuxième position dans laquelle la tringlerie (15) vient en prise avec au moins une partie de la paire de verrouillage de manière à en bloquer le déverrouillage.

2. Dispositif (10) selon la revendication 1, **caractérisé en ce que** le pêne se présente sous la forme d'un étrier (112).

3. Dispositif (10) selon l'une quelconque des revendications 1 ou 2, **caractérisé en ce que** le moyen de retenue se présente sous la forme d'un crochet (111).

4. Dispositif (10) selon l'une quelconque des revendications 1 à 3, **caractérisé en ce que** la tringlerie (15) vient en prise avec le moyen de retenue (111), de manière à en empêcher l'ouverture.

5. Dispositif (10) selon l'une quelconque des revendications 1 à 4, **caractérisé en ce que** la partie de tringlerie (15) venant limiter le déverrouillage de la paire de déverrouillage se présente sous la forme d'un doigt de blocage (153).

6. Dispositif (10) selon l'une quelconque des revendications 1 à 5, **caractérisé en ce que** la partie de la tringlerie (15) apte à venir en prise avec le pêne (112) de manière à bloquer le retour de la tringlerie dans sa deuxième position est une tige (151) montée mobile en translation.

7. Dispositif (10) selon la revendication 6, **caractérisé en ce que** la tige (151) présente une lumière (152) longitudinale apte à venir en prise avec une tige (112b) portée par le pêne (112) et servant de butée à la tige de tringlerie (15).

8. Dispositif (10) selon l'une quelconque des revendications 1 à 7, **caractérisé en ce que** la tringlerie (15) est liée à un moyen d'indication (13) d'état déverrouillable ou verrouillée de la paire de verrouillage (11).

9. Dispositif (10) selon l'une quelconque des revendications 1 à 8 **caractérisé, en ce que** le pêne est associé à au moins un moyen de réglage de sa tension de fin de course, réalisé notamment sous la forme d'une extrémité en ridoir.

10. Dispositif (10) selon l'une quelconque des revendications 1 à 9, **caractérisé en ce qu'**il comprend plusieurs paires de verrouillage (11), disposées notamment le long d'une ligne de verrouillage, les tringleries (15) associées étant reliées entre elles par au moins un moyen (12) de transmission mécanique.

11. Nacelle de turboréacteur comprenant au moins un capot (1) mobile, **caractérisé en ce qu'**elle comprend au moins un dispositif de verrouillage (10) associé selon l'une quelconque des revendications 1 à 10.

## Patentansprüche

1. Vorrichtung zur Verriegelung (10) zwischen einer ersten Struktur und einer zweiten Struktur, umfassend mindestens ein Verriegelungspaar (11), das mindestens einen Riegel (112) umfasst, der an die erste Struktur angeschlossen und ausgelegt ist, mit mindestens einem entsprechenden Rückhaltemittel (111) einzugreifen, das an die zweite Struktur angeschlossen ist, wobei der Riegel (112) ausserdem beweglich entgegen mindestens ein elastisches Umlenkmittel (113) montiert ist, das dazu neigt, ihn in eine Position der Beabstandung vom Rückhaltemittel zurückzubringen,
wobei die Verriegelungsvorrichtung **dadurch gekennzeichnet ist, dass** sie mindestens ein Detektionsgestänge (15) umfasst, das beweglich zwischen einer ersten Position, in der sie die Entriegelung des Riegels (112) und des Rückhaltemittels ermöglicht, wobei dann mindestens ein Teil des Riegels (112) mit dem Gestänge (15) in Eingriff kommt, um eine eventuelle Rückkehr dieses letzteren in eine zweite Position zu blockieren, und der zweiten Position montiert ist, in der das Gestänge (15) mit mindestens einem Teil des Verriegelungspaars in Eingriff kommt, um die Entriegelung davon zu blockieren.

2. Vorrichtung (10) nach Anspruch 1, **dadurch gekennzeichnet, dass** der Riegel die Form eines Steigbügels (112) aufweist.

3. Vorrichtung (10) nach einem der Ansprüche 1 oder 2, **dadurch gekennzeichnet, dass** das Rückhaltemittel die Form eines Hakens (111) aufweist.

4. Vorrichtung (10) nach einem der Ansprüche 1 bis 3, **dadurch gekennzeichnet, dass**. das Gestänge (15) mit dem Rückhaltemittel (111) in derart in Eingriff kommt, dass es die Öffnung davon verhindernt.

5. Vorrichtung (10) nach einem der Ansprüche 1 bis 4, **dadurch gekennzeichnet, dass** der Gestängeteil (15), das Entriegelung des Verriegelungspaars begrenzt, die Form eines Blockierfingers (153) aufweist.

6. Vorrichtung (10) nach einem der Ansprüche 1 bis 5, **dadurch gekennzeichnet, dass** der Teil des Gestänges (15), der ausgelegt ist, um mit dem Riegel (112) in Kontakt zu kommen, um die Rückkehr des Gestänges in seine zweite Position zu blockieren, eine Stange (151) ist, die beweglich in Translation montiert ist.

7. Vorrichtung (10) nach Anspruch 6, **dadurch gekennzeichnet, dass** die Stange (151) eine längsgerichtete Öffnung (152) aufweist, die ausgelegt ist, um mit einer Stange (112b) in Kontakt zu kommen, die vom Riegel (112) getragen ist und als Anschlag für die Stange des Gestänges (15) dient.

8. Vorrichtung (10) nach einem der Ansprüche 1 bis 7, **dadurch gekennzeichnet, dass** das Gestänge (15) mit einem Mittel zur Anzeige (13) des entriegelbaren oder verriegelten Zustands des Verriegelungspaars (11) verbunden ist.

9. Vorrichtung (10) nach einem der Ansprüche 1 bis 8, **dadurch gekennzeichnet, dass** der Riegel mindestens mit einem Mittel zur Einstellung seiner Spannung am Wegende assoziiert ist, das insbesondere die Form eines Spannschlossendes aufweist.

10. Vorrichtung (10) nach einem der Ansprüche 1 bis 9, **dadurch gekennzeichnet, dass** sie mehrere Verriegelungspaare (11) umfasst, die insbesondere entlang einer Verriegelungslinie angeordnet sind, wobei die assoziierten Gestänge (15) untereinander mit mindestens einem Mittel (12) zur mechanischen Übertragung verbunden sind.

11. Triebwerksgondel, umfassend mindestens eine bewegliche Verkleidung (1), **dadurch gekennzeichnet, dass** sie mindestens eine Verriegelungsvorrichtung (10) umfasst, die nach einem der Ansprüche 1 bis 10 assoziiert ist.

## Claims

1. A locking device (10) between a first structure and a second structure, comprising at least one locking pair (11) including at least one bolt (112) fastened to the first structure and capable to engage at least one corresponding retaining means (111), fastened to the second structure, the bolt (112) being also movably mounted in opposition to at least one elastic return means (113) tending to bring it back into a spacing position from the retaining means,
said locking device being **characterized in that** it comprises at least one detection linkage (15), movably mounted between a first position wherein it allows the unlocking of the bolt (112) and of the retaining means, at least a portion of the bolt (112) then engaging the linkage (15) so as to block a possible return of the latter to a second position, and said second position wherein the linkage (15) engages at least a portion of the locking pair so as to block the unlocking thereof.

2. The device (10) according to claim 1, **characterized in that** the bolt is in the form of a yoke (112).

3. The device (10) according to any one of claims 1 or 2, **characterized in that** the retaining means is in the form of a hook (111).

4. The device (10) according to any one of claims 1 to 3, **characterized in that** the linkage (15) engages the retaining means (111), so as to prevent the opening thereof.

5. The device (10) according to any one of claims 1 to 4, **characterized in that** the portion of the linkage (15) limiting the unlocking of the unlocking pair is in the form of a blocking finger (153).

6. The device (10) according to any one of claims 1 to 5, **characterized in that** the portion of the linkage (15) capable to engage the bolt (112) so as to block the return of the linkage in its second position is a rod (151) movably mounted in translation.

7. The device (10) according to claim 6, **characterized in that** the rod (151) has a longitudinal lumen (152) capable to engage a rod (112b) carried by the bolt (112) and used as a stop for the rod of the linkage (15).

8. The device (10) according to any one of claims 1 to 7, **characterized in that** the linkage (15) is connected to a means (13) for indicating unlockable or locked condition of the locking pair (11).

9. The device (10) according to any one of claims 1 to 8, **characterized in that** the bolt is associated with at least one means for adjusting its voltage limit, produced in particular in the form of a turnbuckle end.

10. The device (10) according to any one of claims 1 to 9, **characterized in that** it comprises several locking pairs (11), particularly disposed along a locking line, the associated linkages (15) being connected together by at least one mechanical transmission means (12).

11. A turbojet engine nacelle comprising at least one mobile cowl (1), **characterized in that** it comprises at least one associated locking device (10) according to any one of claims 1 to 10.
